Europäisches Patentamt

European Patent Office

Office européen des brevets

(19)

‖‖‖‖‖‖‖‖‖‖‖‖‖‖‖‖‖‖‖‖‖

(11) Numéro de publication : **0 285 476 B1**

(12) **FASCICULE DE BREVET EUROPEEN**

(45) Date de publication du fascicule du brevet :
27.05.92 Bulletin 92/22

(51) Int. Cl.⁵ : **H01M 4/04, C23C 2/00**

(21) Numéro de dépôt : 88400546.3

(22) Date de dépôt : 09.03.88

(54) **Electrode mince supportée sur feuillard conducteur électronique et procédé de fabrication.**

(30) Priorité : 11.03.87 CA 531715

(43) Date de publication de la demande :
05.10.88 Bulletin 88/40

(45) Mention de la délivrance du brevet :
27.05.92 Bulletin 92/22

(84) Etats contractants désignés :
AT BE CH DE ES FR GB GR IT LI LU NL SE

(56) Documents cités :
EP-A- 0 159 937
AT-A- 369 436
FR-A- 962 471
GB-A- 905 611
US-A- 4 011 372
US-A- 4 081 005
PATENT ABSTRACTS OF JAPAN, vol. 11, no.
83 (E-489)[2530], 13 mars 1987; & JP-A-61 239
561 (MATSUSHITA ELECTRIC IND. CO.LTD)
24-10-1986
PATENT ABSTRACTS OF JAPAN, vol. 6, no. 91
(E-109)[969], 28 mai 1982; & JP-A-57 23 463
(YUASA DENCHI K.K.) 06-02-1982
CHEMICAL ABSTRACTS, vol. 71, no. 14, 6
octobre 1969, page 433, résumé no. 66575p,
Columbus, Ohio, US; E.A.J. TONI:
"Lithiumanode", & NASA CONTRACT. REP.
1968, NASA-CR-97489, 24-6

(56) Documents cités :
DERWENT JAPANESE PATENTS REPORT,
vol. U, no. 42, 20 novembre 1973, résumé no.
63748U, Derwent Publications Ltd, Londres,
GB;& JP-A-73 33 811 (SANYO ELECTRIC CO.
LTD) 17-10-73
PATENT ABSTRACTS OF JAPAN, vol. 7, no.
147 (C173)[1292], 28 juin 1983; & JP-A-58 58
262 (SHIN NIPPON SEITETSU K.K.)06-04-1983
PATENT ABSTRACTS OF JAPAN, vol. 7, no. 77
(C-159)[1222] 30 mars 1983; & JP-A-58 99 69
(NITSUSHIN SEIKOU K.K.) 20-01-1983

(73) Titulaire : HYDRO-QUEBEC
75, Boulevard René Levesque Ouest
Montréal Québec H2Z 1A4 (CA)
Titulaire : SOCIETE NATIONALE ELF
AQUITAINE
Tour Elf, 2, Place de la Coupole, La Défense 6
F-92400 Courbevoie (FR)

(72) Inventeur : Belanger, André
625 rue Blain
Sainte-Julie Québec H2Z 1A4 (CA)
Inventeur : Gauthier, Michel
237 St-Ignace
Laprairie Québec J5R 1E6 (CA)
Inventeur : Robitaille, Michel
325 Chemin du Fer à Cheval
Sainte-Julie Québec J0L 2C0 (CA)

(74) Mandataire : Boillot, Marc
SOCIETE NATIONALE ELF AQUITAINE
Division Propriété Industrielle Tour Elf
F-92078 Paris la Défense Cédex 45 (FR)

## Description

L'invention est relative à des électrodes de lithium, minces supportées ainsi qu'à un procédé pour produire ces électrodes. Plus précisément, la présente invention concerne un procédé de fabrication d'électrodes minces, supportées sur un feuillard conducteur électronique, de lithium, d'alliages de lithium ou de lithium dopé ainsi que les électrodes obtenues par ce procédé.

Le développement des générateurs au lithium évolue très rapidement depuis quelques années avec l'apparition sur le marché de générateurs au lithium rechargeables (Moli Energy Ltd., Burnaby, B.C. Canada ) et l'apparition récente des accumulateurs tout-solides à électrolytes polymères. Ces nouveaux systèmes ont tous un trait commun, c'est la tendance à mettre en oeuvre des technologies de films minces où les densités de courant sont faibles et par conséquent favorables à la bonne redéposition et au cyclage des électrodes de lithium. Cette tendance a accentué le besoin de produire des électrodes de lithium de plus en plus minces: ∼100 μmpour les piles à électrolytes liquides et < 30 μm =>∼1 μmpour les électrolytes polymères.

La mise en oeuvre et la manipulation de films minces de lithium est relativement facile lorsque les épaisseurs du film demeurent voisines de 100 μm et des films produits commercialement sont disponibles à un prix de l'ordre de 100 dollars la lb (0.45 Kg). Toutefois le coût de films plus minces croît rapidement pour des films qui doivent alors être produits par extrusion puis par laminage, cette dernière étape étant alors plus lente et plus délicate à mettre en oeuvre (coût de main d'oeuvre élevé) ce qui a pour effet de tripler au moins le coût du lithium produit. Cela est d'autant plus vrai que le lithium constitue une partie non négligeable des coûts de l'accumulateur, le coût d' lithium pouvant représenter jusqu'à 50% des coûts de l'accumulateur. En plus du coût plus élevé des films très minces (< 50 μ m)le film devient aussi difficile à manipuler à cause de la grande déformabilité du Li résultant de sa maléabilité et de son adhésion avec la plupart des matériaux usuels. Cela se traduit par une difficulté énorme de manipulation de films minces de lithium dans des procédés continus d'assemblage de piles constituées de films superposés: électrode (+)/électrolyte/électrode de lithium.

La technologie de fabrication de piles au lithium à électrolytes polymères qui intéresse plus particulièrement la présente invention est particulièrement exigeante à ce sujet puisque les épaisseurs de lithium requises compte tenu des caractéristiques des électrolytes actuellement connus varient entre 30 et ∼ 1 μm d'épaisseur. Des astuces peuvent être mises en jeu pour contourner cette difficulté comme l'utilisation d'électrodes négatives bifaces qui permettent l'utilisation du double de l'épaisseur voulue (Third International Meeting on Lithium Batteries, 27 au 30 mai 1986, Kyoto, Japan, Abstract #ST-11). Toutefois si l'on cherche à construire des accumulateurs de type bipolaires correspondant à la séquence:

Li/Electrolyte/( + )/Ni/Li/Electrolyte/( + )/Ni/Li....( + )/Ni,

où le nickel est choisi comme exemple, il devient nécessaire de disposer de films très minces si l'on veut éviter un excès de lithium. L'excès de lithium est en effet défavorable sur le coût de la matière première et sur la densité d'énergie stockée, surtout en terme d'énergie volumique; cet excès devient même crucial pour des accumulateurs conçus pour travailler à la température ambiante et où les quantités de lithium requises (1-2 Coulombs/cm2) sont très faibles, et correspondent à des épaisseurs de lithium variant de 1 à 5 μm.

Divers procédés ont été suggérés pour produire des films ultra minces de lithium, notamment dans le cas de films déposés sur un collecteur de lithium. C'est le cas par exemple du dépôt de lithium par évaporation thermique ou par "sputtering" ou par "electron beam". Ces techniques sont cependant relativement lentes et coûteuses car elles s'effectuent sous vide haussé et dans des conditions de propreté rigoureuses. Des films minces peuvent ainsi être obtenus notamment pour des épaisseurs inférieures au micron. D'autres procédés tels que le laminage puis couchage par transfert sur support métallique ont été décrits U.S. 3.756.789, 4 septembre 1973, Alder et U.S. 3.721.113, 20 mars 1973, Hovsepian, ou encore, la coextrusion à chaud avec un film de matière plastique (Demandes de brevets européens 0 146 241, Park et coll., 26 juin 1985 et 0 145 498, Cook et coll. 19 juin 1985). Ces procédés ont tous des inconvénients importants lorsque l'on cherche à les appliquer aux piles rechargeables à électrolytes polymères.

D'autre part, il existe des méthodes de plaquage de feuilles d'acier par déroulement de cette dernière dans un bain de zinc. On peut mentionner à ce sujet les brevets suivants:

| | | |
|---|---|---|
| Japon | 57-203758 | Nippon Steel |
| Japon | 57-203759 | Nippon Steel |
| Japon | 57-203760 | Nippon Steel |
| GB | 2.080.340 | Nippon Steel |
| Canada | 1.145.210 | Battelle Memorial Institute |

La technique préconisée dans ces brevets n'est de toute évidence pas adaptable à la production de couche mince de lithium sur un feuillet métallique. On peut aussi mentionner la galvanisation au rouleau sur une seule face d'une feuille d'acier d'après un procédé Nippon Steel (L'Usine Nouvelle, Décembre 1986).

Pour les applications batterie, le contrôle de l'épaisseur des films de lithium est beaucoup plus critique que dans les procédés de galvanisation. D'une part, si le lithium est trop mince, une partie du collecteur pourra être mise à nu lors de la décharge et ainsi provoquer des problèmes irréversibles ou tout au moins sévères à la recharge. On sait en effet que la redéposition du lithium peut être effectuée un grand nombre de fois ( > 500 cycles) pourvu que le lithium soit redéposé sur lui-même et non sur un collecteur métallique, par exemple le nickel. D'autre part, le contrôle de l'épaisseur est indispensable pour éviter l'addition de surépaisseur lors de la fabrication de piles complètes, lesquelles épaisseurs sont pénalisantes en coût et en énergie stockée. Ce contrôle de l'épaisseur est finalement nécessaire pour assurer le balancement précis des capacités surfaciques (Coulombs/cm$^2$) des électrodes lors d'assemblage de piles en série sous peine de voir la capacité des piles individuelles évoluer de façon divergente lors du cyclage.

La présente invention vise à s'affranchir des difficultés mentionnées ci-dessus de mise en oeuvre d'électrodes de lithium et à produire rapidement, économiquement et de façon particulièrement reproductible d'un lot à l'autre des films de lithium d'épaisseurs variables, notamment entre 40 μm et environ 0,1 μm.

La présente invention vise aussi à mettre en jeu les remarquables propriétés de mouillage du lithium fondu, allié ou dopé, à l'état fondu, sur les métaux, notamment le nickel et le cuivre.

Un objet de l'invention est la mise au point d'un procédé rapide d'élaboration de rouleaux de lithium épandus sur un support préférentiellement métallique ou d'autres matériaux métallisés ou résistant à la chaleur, en se servant de la rapidité de mouillage par le lithium de feuillards minces dont l'épaisseur peut varier entre environ 1 et 20 μm.

Un autre objet de l'invention consiste à se servir de la rapidité du procédé pour réduire le temps de résidence du lithium fondu avec le matériau du support et d'éviter son attaque chimique ou thermique par le lithium fondu.

Un autre objet de l'invention consiste à régler le dispositif utilisé et la vitesse de déroulement du feuillard préférentiellement métallique de façon à permettre des traitements thermiques du lithium, tels la vitesse de solidification (microcristallinité du lithium) ou des traitements chimiques contrôlés.

Un autre objet de l'invention réside dans la fabrication d'électrodes de lithium supportées destinées à des accumulateurs à électrolytes polymères en se servant de lithium fondu appliqué par des méthodes qui permettent un contrôle rigoureux de l'épaisseur du dépôt de lithium.

Un autre objet de l'invention est d'assurer des dépôts minces et reproductibles en contrôlant l'épaisseur et donc la capacité de la couche de lithium, ce qui a pour effet d'autre part de réduire l'excès de lithium et d'autre part d'assurer un bon fonctionnement électrochimique lors du recyclage de l'électrode de lithium et de l'accumulateur.

Dans un aspect large, l'invention concerne un procédé de fabrication d'électrodes minces, supportées sur un feuillard conducteur électronique, d'un élément choisi parmi le lithium, le lithium allié ou dopé dont le point de fusion ne s'écarte pas du point de fusion du lithium par plus ou moins 50°C, et d'épasseur constante dudit élément, à partir d'un enroulement du feuillard et d'une source de l'élément. Selon ce procédé :

. l'on déroule en continu ledit feuillard,

. l'on applique continuellement sur au moins l'une des deux faces dudit feuillard, une quantité constante de l'élément à l'état fondu, de manière à produire un film sur ledit feuillard dont l'épaisseur est constante et se situe entre environ 0,1 et environ 40 μm et dont la surface est homogène et uniforme, ladite application étant réalisée en faisant circuler de façon continue dans le bain un rouleau enducteur d'élément fondu, qui possède un axe parallèle à la surface du bain d'élément à l'état fondu et dont la base est immergée dans l'élément en fusion et le sommet est en contact avec ladite face du feuillard, la surface du rouleau comportant des aspérités permettant d'enduire le rouleau avec de l'élément fondu et de déposer uniformément ce dernier sur la face du feuillard,

. l'on empêche l'élément à l'état fondu de figer au contact du feuillard, et

. l'on provoque la solidification contrôlée dudit élément sur le feuillard après formation du film de cet élément sur ledit feuillard.

Il va de soi que le procédé se prête également à la préparation de collecteur recouvert de lithium sur les'deux faces. Par exemple, le procédé selon la présente invention peut s'appliquer à l'enduction par le lithium, le lithium allié ou le lithium dopé, d'un feuillard qui a déjà été enduit sur la face quine reçoit pas de lithium, du matériau d'une électrode positive, ou même du matériau de l'électrode positive recouvert d'un électrolyte.

Selon une réalisation préférée de l'invention, le feuillard est constituée par un métal, un alliage, une fibre de verre métallisée ou un plastique chargé ou métallisé. Le métal préféré est choisi parmi le cuivre, le nickel, le fer et le molybdène. Lorsque le feuillard est en alliage, celui-(ci est de préférence à base de nickel, cuivre ou fer, par exemple, il peut être en bronze, en laiton, en monel ou en acier.. En pratique, on préfère utiliser un feuillard en nickel.

Quant à l'élément à l'état fondu, ce peut être du lithium métallique, ou des composés ou alliages riches en lithium dont le point de fusion est voisin de celui du lithium, à ±50°C, par exemple le lithium allié ou dopé avec l'antimoine, le bismuth, le bore, l'étain, le silicium, le magnésium.

Selon une autre réalisation préférée de l'invention, l'on maintient le bain à une température variant entre le point de fusion du lithium et environ 400°C .

Selon une autre réalisation préférée de l'invention, l'on déroule le feuillard au-dessus du bain de l'élément à l'état fondu.

Bien que les aspérités à la surface du rouleau puissent être quelconques, elles sont de préférence constituées par des motifs à géométrie régulière constituant des cavités régulièrement distribuées sur la surface du rouleau lesquelles recueillent le matériau en fusion et le déposent sur le feuillard métallique. Les cavités distribuée à la surface du rouleau sont notamment calibrées en fonctions de l'épaisseur du dépôt de l'élément.

Le déroulement du feuillard s'effectue de préférence à une vitesse dont la valeur se situe entre 0,5 cm /s et 100 cm /s. De plus, on peut, selon les circonstances chauffer le rouleau afin d'empêcher le lithium, pur, dopé ou allié, en fusion de figer avant de le déposer sur la face du feuillard à recouvrir de l'élément à l'état fondu,

Selon une autre réalisation de l'invention, l'on fait subir un traitement thermique au feuillard avant et/ou après lui avoir appliqué l'élément à l'état fondu sur ladite face.

Selon une autre réalisation de l'invention, on a prévu une racle permettant d'enlever tout excès de matériau en fusion de la surface du rouleau avant d'appliquer ce dernier contre la face à enduire du feuillard métallique.

Selon une autre réalisation de la présente invention, après avoir enduit le feuillard métallique au moyen de l'élément en fusion, on traite la face enduite du feuillard avec un racloir permettant de réduire l'épaisseur de l'élément appliqué et le cas échéant d'uniformiser les imperfections de surface éventuellement laissées par le rouleau.

De préférence, on maintient le bain d'élément fondu ainsi que le feuillard au voisinage dudit bain dans une atmosphère inerte ne contenant ni oxygène ni vapeur d'eau afin de prévenir toute réaction indésirable.

Il va de soi que le dispositif décrit peut être modifé de façon à enduire au besoin les deux faces du collecteur métallique ainsi que cela apparaîtra évident à l'homme de l'art.

L'invention va maintenant être illustrée par les dessins annexés donnés à titre d'exemple et sans caractère limitatif. Dans les dessins:

la FIGURE 1 est un schéma représentant un appareil permettant la mise en oeuvre du procédé selon la présente invention;

la FIGURE 2 est un schéma d'un autre appareil permettant la mise en oeuvre du procédé;

la FIGURE 3 est un autre schéma illustrant un racloir pouvant être adapté aux appareils des figures 1 et 2;

la FIGURE 4 est une coupe d'un accumulateur incorporant une anode selon la présente invention;

la FIGURE 5 est une vue en plan d'un feuillard métallique recouvert d'une bande de lithium;

la FIGURE 6 est une autre vue en plan d'un feuillard métallique avec motif répété; et

la FIGURE 7 est une autre vue en plan d'un feuillard métallique avec un autre motif répété.

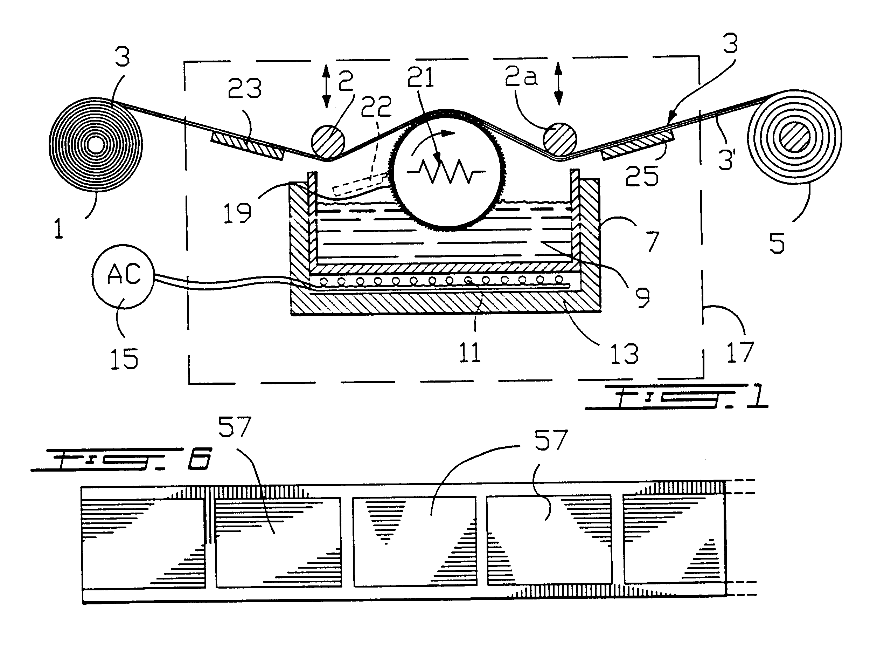

L'appareil illustré schématiquement en Figure 1 est constitué d'une bobine 1 d'alimentation en feuillard 3 métallique ou métallisé. D'autre part, pour recevoir le feuillard une fois celui-ci traité, on retrouve une bobine réceptrice 5 assurant la traction du feuillard lors du traitement qui sera décrit plus loin. L'appareil comprend d'autre part un bain 7 destiné à contenir du lithium fondu 9. Pour s'assurer que le lithium 9 sera maintenu à l'état fondu et conservera une température contrôlée, on a prévu un élément chauffant 11 ainsi qu'une isolation thermique 13. On notera que l'élément chauffant est relié de façon conventionnelle à une source de courant alternatif 15. Enfin, on a illustré de façon schématique en 17, une zone ou le bain ainsi que le feuillard 13 en train d'être traité seront maintenus sous une atmosphère contrôlée de façon à éliminer l'oxygène, la vapeur d'eau et les autres gaz risquant de réagir avec le lithium. Cette zone, est tout à fait conventionnelle et ne fait pas partie de l'invention.

L'enducteur utilisé pour déposer un film de lithium fondu 3' sur la face inférieure du feuillard métallique 3 est constitué d'un rouleau texturé 19 dont le motif en surface permet à cause de sa capillarité le dépôt de lithium sur la face inférieure du feuillard 3. De plus, afin de conserver une température adéquate au lithium fondu, ce rouleau texturé 19 est muni des moyens de chauffe conventionnels 21 permettant de contrôler adéquatement la température du lithium fondu sur la surface du rouleau. On peut, si on le désire prévoir une racle 22 (illustrée en pointillé sur la figure 1) permettant d'enlever tout excès de matériau en fusion de la surface du rouleau avant d'appliquer ce dernier contre la face 3, à enduire du feuillard métallique.

Afin d'assurer un contact adéquat du feuillard sur le rouleau texturé 19, on a prévu des tiges 2,2a qui s'appuient sur la face supérieure du feuillard 3 et permettent d'ajuster l'angle de contact du feuillard 3 sur le rouleau texturé 19. Avant que le feuillard 3 ne pénètre dans la zone définie par le lithium fondu, on a prévu un conditionneur de température 23 permettant d'ajuster la température du feuillard à son arrivée au-dessus du bain de lithium fondu. De même, on a prévu un autre conditionneur de température 25 lequel est ajusté soit pour produire un traitement thermique ou provoquer un refroidissement du couple Li°/feuillard avant son enroulement sur le rouleau 5.

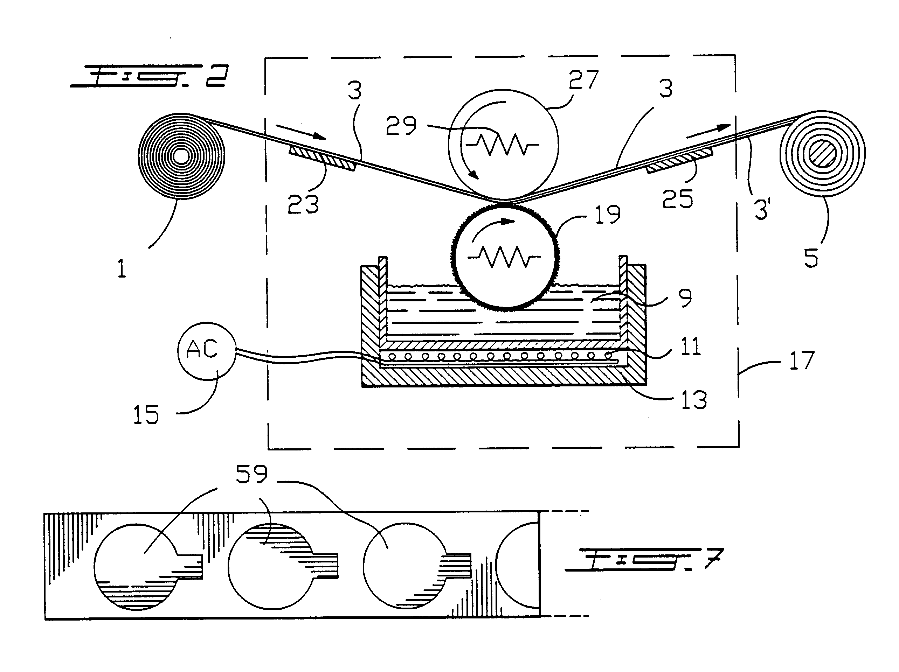

On a illustré sur la Figure 2 une modification de l'appareil schématisé en Figure 1. Dans cette réalisation, dont les parties communes avec l'appareil illustré sur la Figure 1 sont identifiées par les mêmes chiffres de référence, on verra que l'on a prévu un rouleau 27 permettant l'entraînement par friction du feuillard métallique 3 entre les rouleaux 19 et 27. D'autre part, ce rouleau 27 est muni de moyens de chauffage 29 afin d'assurer une température adéquate au feuillard lorsque celui-ci est sous traitement.

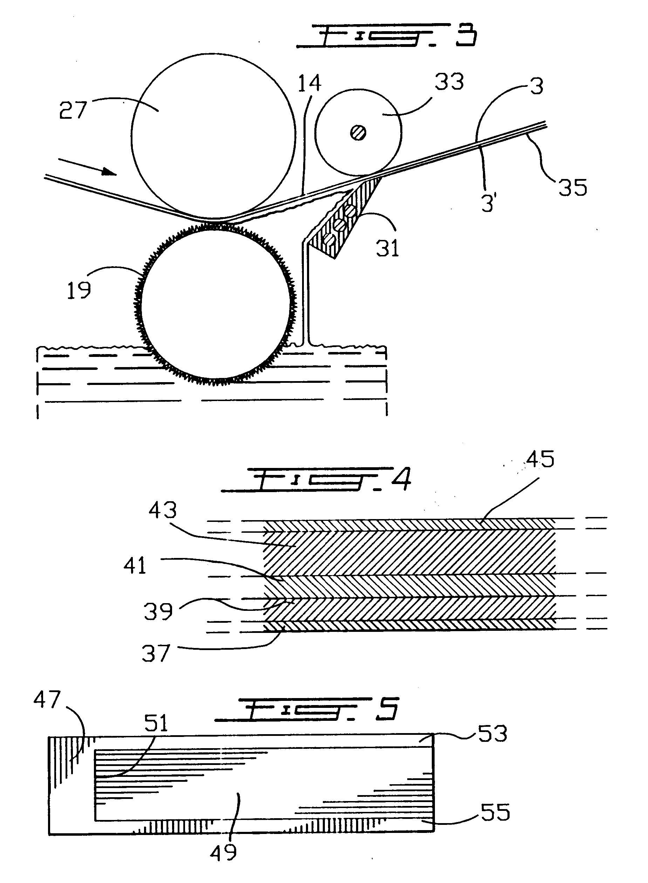

En se référant maintenant à la Figure 3, on verra que le dispositif illustré en Figure 2 peut être muni d'un racloir 31 permettant de réduire l'épaisseur et ou d'uniformiser des imperfections de surface qu'aurait pu laisser le rouleau engraveur 19. Cet outil supplémentaire doit être chaud pour permettre aux excès raclés de retourner au bain en voie liquide. Cela est rendu possible par l'introduction de moyens de chauffage (non illustrés) et tout à fait conventionnels. De plus, afin que la surface raclée soit bien homogène, on a prévu un rouleau d'appui 33 immédiatement au-dessus du racloir 31. En 35, on illustre la surface homogénéisée du feuillard enduit de lithium fondu. Ce dispositif est particulièrement utile quand on dépose des épaisseurs importantes de lithium. Dans ce cas, le motif même du rouleau graveur risque de laisser des marques sur le lithium après le refroidisse-ment. Le racloir 33 chauffant peut éliminer ces imperfections de surface.

On peut utiliser le produit obtenu selon l'invention pour constituer un accumulateur tel qu'illustré en Figure 4. On verra que ce dernier comporte un collecteur de cuivre 37 dont l'épaisseur est environ 10 μm. La couche de lithium 39 obtenue par le procédé selon l'invention a une épaisseur d'environ 20 μm. L'accumulateur est constitué d'autre part d'un électrolyte polymère 41 de 20 μm d'épaisseur, et de l'électrode positive 43 de 40 μm d'épaisseur et d'un collecteur de cuivre 45 de 10 yμmd'épaisseur le tout ayant une épaisseur de 100 μm

Des exemples de feuillards recouverts de bandes de lithium sont illustrés aux Figures 5, 6 et 7. Dans la Figure 5, on voit le feuillard métallique 47, ainsi que le lithium métallique 49 déposé sur le feuillard 47. Le début de l'épandage est illustré en 51 tandis que les deux bandes non recouvertes sont identifiées par les chiffres de référence 53,55. Si l'on désire avoir des feuillards de nickel recouverts de lithium à motifs répétés, on peut se servir d'un rouleau enducteur 19 dont le motif servira à produire des motifs répétés 57. On peut évidemment préférer d'autres motifs que celui illustré dans la Figure 6, par exemple, celui illustré en Figure 7 en 59.

Les exemples suivants sont donnés à titre purement illustratif mais sans caractère limitatif.

L'invention va maintenant être illustrée par les exemples qui suivent donnés sans caractère limitatif.

Exemple 1

Un rouleau de feuillard de cuivre électrolytique (largeur: 7,6 cm et épaisseur: 25 μm) a été utilisé pour fabriquer des électrodes de lithium. Le dispositif choisi fut celui de la Figure 1 confiné dans une boîte à gants (atmosphère d'hélium), $H_2O$ < 10 ppm et $0_2$ < 10 ppm). Le feuillard a été placé tel qu'indiqué sur la Figure 1. Le déroulement, assuré par le rouleau tracteur a été fixé à une vitesse de 2 cm/s . Le rouleau enducteur d'acier inoxydable a une largeur de 7 cm et est placé au centre du feuillard de cuivre. Le rouleau a un diamètre de 2,5 cm et sa surface est faite d'un motif dont les caractéristiques sont les suivantes : forme pyramidale; 79 motifs par cm ; profondeur du motif : 24 μm ; volume du motif : 7,7 x $10^{-4}$ cm³ par cm², selon la description faite par la compagnie INTA ROTO INC. de Richmond en Virginie. La température du bain de lithium est maintenue à 260°C durant l'essai. Environ 30% du volume du rouleau trempe dans le liquide. Le bac d'acier inoxydable dont les dimensions sont de 10x5x2 cm contient approximativement 50cm³ de lithium de qualité "Batterie". Pour cet essai, les plaques de conditionnement (23 et 25) ne sont pas utilisées. De cette façon, quelques 10 mètres de lithium enduit sur cuivre ont été produits et enroulés sur la bobine réceptrice.

Le lithium ainsi obtenu a un aspect très métallique dont la surface est exempte de défauts (< 0,5 μm). Les arêtes du lithium sur le cuivre sont droites et sans bavure.

L'épaisseur moyenne du lithium est de 5 μm et d'une bonne régularité: variations inférieures à 0,5 μm dans toutes les directions.

La consommation de lithium est de l'ordre de 3 pour une épaisseur de 5 μm.

Remarque: pour produire des quantités plus importantes de lithium en continu, il faut tout simplement prévoir l'ajout régulier de lithium frais au bac.

Exemple 2

On a utilisé pour cet exemple le même dispositif qu'à l'exemple 1 mais cette fois en utilisant un rouleau "encreur" dont le motif de surface est un peu plus marqué : i.e.: forme pyramidale ; 10 motifs par cm ; profondeur du motif : 33 $\mu$m ; volume du motif : 111 x $10^{-4}$ cm$^3$ par cm$^2$. Les mêmes conditions expérimentales ont été utilisées: vitesse= 2 cm/s ; T du bain = 260°C. L'épaisseur résultante de lithium sur le cuivre a été en moyenne de 8 microns. Ce qui, traduit en consommation de lithium, correspond à 7 cm$^3$ de lithium sur 10 mètres ou 14 Ampère-heure de charge électrique. Le bain et son environnement immédiat sont maintenus sous hélium alors que la bobine réceptrice est gardée sous air sec. (air sec: un point de rosée (dew-point) < -25°C à 70°C ).

## Exemple 3

Avec le dispositif de la figure 1 toujours, on a quintuplé (environ 10 cm/s ) la vitesse de déroulement du feuillard et obtenu une même épaisseur de lithium résultante en préchauffant un feuillard de nickel (largeur 7 cm; épaisseur 8 $\mu$m) à 300°C à l'aide du conditionneur de température 23 et en chauffant le rouleau "encreur" à 300°C tout en maintenant la température du bac à 260°C. Un léger jet d'hélium est utilisé en 25 pour refroidir l'assemblage Li/Ni avant d'atteindre la bobine d'enroulement.

## Exemple 4

Le lithium produit à l'exemple 1 a été utilisé pour assembler des piles de petites dimensions (4cm$^2$). Une rondelle de 4 cm$^2$ a été prélevée de l'ex. 1 à l'aide d'un emporte-pièce. Sur ce lithium a été apposé un film d'éléctrolyte de 75 $\mu$m d'épaisseur constitué d'un mélange de polyox de d'éthylène et de perchlorate de lithium dans un rapport 20/1. Sur cette demi-pile on a placé une életrode positive à base de tiS$_2$ sur collecteur de nickel et dont la capacité surfacique est de 1,5 Coulomb/cm$^2$. Portée à 80°C cette pile a pu être cyclée plus de 100 cycles sans épuisement apparent du lithium.

## Exemple 5

En utilisant un électrolyte plus conducteur, par exemple en remplaçant le polyoxyde d'éthylène par un copolymère de synthèse tel que décrit dans la demande de brevet canadien No. 479.862 du 23 avril 1985 Brevet Canadien N° 1269 700, d'une épaisseur de 50 $\mu$m, on a pu atteindre 50 cycles de décharges et charges profondes sans qu'il y ait apparition de dendrites ou autre signe de malfonctionnement de l'électrode de lithium.

## Exemple 6

En utilisant l'électrode de lithium préparée à l'exemple 2, une autre pile de 4 cm$^2$ a été assemblée avec un électrolyte à base de copolymère mais en utilisant une électrode positive de capacité plus élevée faite à base de V$_6$O$_{13}$: 5 coulombs/cm$_2$. Ainsi à 10 $\mu$m de lithium (i.e.: 7,3 coulombs/cm$^2$) soit au voisinage d'un demi excès de lithium vs l'électrode positive, on a pu à 60°C réaliser plus de 75 cycles profonds sans croissance dendritique ou autre phénomène qui serait relié au mauvais fonctionnement de l'électrode de lithium.

## Exemple 7

Grâce au lithium mince préparé toujours à l'exemple 3, on a pu réaliser l'assemblage d'une pile de plus de 50 volts contenant la superposition en série de 17 piles élémentaires dont la tension était voisine de 3,5 volts l'unité.

Dans cet exemple, l'électrode positive était fabriquée à base de MnO$_2$ et l'électrolyte à base de copolymère comme décrit précédemment. La particularité de ce montage se situe dans la minceur exceptionnelle de cette pile: moins d'un millimètre d'épaisseur.

## Revendications

1. Procédé de fabrication d'électrodes minces, supportées sur un feuillard conducteur électronique, d'un élément choisi parmi le lithium, le lithium allié ou dopé dont le point de fusion ne s'écarte pas du point de fusion du lithium par plus ou moins 50°C, et d'épaisseur constante dudit élément, à partir d'un enroulement dudit feuillard et d'une source dudit élément, caractérisé en ce que

. l'on constitue un bain dudit élément à l'état fondu maintenu sous atmosphère inerte,

. l'on déroule en continu ledit feuillard,

. l'on applique continuellement sur au moins l'une des deux faces dudit feuillard, une quantité constante de l'élément à l'état fondu, de manière à produire un film sur ledit feuillard dont l'épaisseur est constante et se situe entre environ 0,1 et environ 40 µm et dont la surface est homogène et uniforme, ladite application étant réalisée en faisant circuler de façon continue dans le bain un rouleau enducteur d'élément fondu, qui possède un axe parallèle à la surface du bain d'élément à l'état fondu et dont la base est immergée dans l'élément en fusion et le sommet est en contact avec ladite face du feuillard, la surface du rouleau comportant des aspérités permettant d'enduire le rouleau avec de l'élément fondu et de déposer uniformément ce dernier sur la face du feuillard,

. l'on empêche l'élément à l'état fondu de figer au contact du feuillard, et

. l'on provoque la solidification contrôlée dudit élément sur le feuillard après formation du film de cet élément sur ledit feuillard.

2. Procédé selon la revendication 1, caractérisé en ce que le feuillard est choisi dans le groupe constitué par un métal, un alliage, une fibre de verre métallisée et un plastique chargé ou métallisé.

3. Procédé selon la revendication 2, caractérisé en ce que le feuillard est en un métal choisi parmi cuivre, nickel, fer et molybdène.

4. Procédé selon la revendication 2, caractérisé en ce que le feuillard est constitué d'alliages à base de nickel, de cuivre ou de fer.

5. Procédé selon la revendication 4, caractérisé en ce que le feuillard est en laiton, en bronze, en acier ou en monel.

6. Procédé selon la revendication 2, caractérisé en ce que le feuillard est en nickel.

7. Procédé selon l'une des revendications 1 à 6, caractérisé en ce que l'élément est du lithium métallique.

8. Procédé selon l'une des revendications 1 à 6, caractérisé en ce que l'élément est le lithium allié ou dopé.

9. Procédé selon la revendication 8, caractérisé en ce que le lithium est allié ou dopé avec l'antimoine, le bismuth, le bore, l'étain, le silicium, le magnésium.

10. Procédé selon la revendication 7, caractérisé en ce que l'on maintient le bain à une température variant entre le point de fusion du lithium et environ 400°C.

11. Procédé selon l'une des revendications 1 à 10, caractérisé en ce que l'on déroule le feuillard au-dessus du bain de l'élément à l'état fondu.

12. Procédé selon l'une des revendications 1 à 11, caractérisé en ce que les aspérités présentes sur la surface du rouleau sont constituées de motifs à géométrie régulière formant des cavités régulièrement distribuées sur la surface du rouleau, lesdites cavités recueillant l'élément en fusion et le déposant sur le feuillard métallique.

13. Procédé selon la revendication 12, caractérisé en ce que les cavités distribuées sur la surface du rouleau sont calibrées en fonction de l'épaisseur du dépôt de l'élément.

14. Procédé selon l'une des revendications 1 à 13, caractérisé en ce que l'on déroule le feuillard à une vitesse comprise entre 0,5 cm/s et 100 cm/s.

15. Procédé selon l'une des revendications 1 à 14, caractérisé en ce que l'on chauffe le rouleau afin d'empêcher l'élément en fusion de figer avant de le déposer sur la face du feuillard à enduire.

16. Procédé selon l'une des revendications 1 à 15, caractérisé en ce que l'on fait subir un traitement thermique au feuillard avant et après lui avoir appliqué l'élément à l'état fondu sur au moins l'une de ses faces.

17. Procédé selon l'une des revendications 1 à 16, caractérisé en ce qu'après avoir enduit le feuillard métallique au moyen de l'élément en fusion, on traite la face enduite du feuillard avec un racloir permettant de réduire l'épaisseur de l'élément appliqué et le cas échéant d'uniformiser les imperfections de surface éventuellement laissées par le rouleau.

18. Procédé selon l'une des revendications 1 à 17, caractérisé en ce que l'on maintient le bain d'élément fondu ainsi que le feuillard au voisinage dudit bain dans une atmosphère inerte ne contenant ni oxygène ni vapeur d'eau.

19.- Procédé selon l'une des revendications 1 à 18, caractérisé en ce que l'on prévoit une racle permettant d'enlever tout excès d'élément en fusion de la surface du rouleau avant d'appliquer ce dernier contre la face à enduire du feuillard.

20. Procédé selon l'une des revendications 1 à 19, caractérisé en ce que le feuillard arrivant au contact du rouleau enducteur passe entre ledit rouleau enducteur et un rouleau muni de moyens de chauffage et prévu pour permettre l'entraînement par friction dudit feuillard entre lesdits rouleaux.

**Patentansprüche**

1. Verfahren zur Herstellung dünner Elektroden, die auf einem leitenden Elektronik-Bandmaterial getragen werden,

. aus einem Grundstoff, der aus Lithium und aus legiertem oder dotiertem Lithlum, dessen Schmelzpunkt um nicht mehr oder weniger als 50° C vom Schmelzpunkt von Lithium abweicht, ausgewählt wird, und

. mit einer konstanten Dicke des Grundstoffs,

. ausgehend von einem Wickel des Bandmaterials und einer quelle für den Grundstoff, dadurch gekennzeichnet,

. daß man ein Bad aus dem Grundstoff in geschmolzenem Zustand bereitstellt, das unter einer Inertatmosphäre gehalten wird,

. daß man das Bandmaterial fortlaufend abwickelt,

. daß man auf wenigstens eine der zwei Seiten des Bandmaterials kontinuierlich eine konstante Menge des Grundstoffs im geschmolzenen Zustand aufbringt, um so einen Film auf dem Bandmaterial zu erzeugen, dessen Dicke konstant ist und ungefähr zwischen 0,1 und ungefähr 40 µm liegt und dessen Oberfläche homogen und gleichförmig ist, wobei das Aufbringen so ausgeführt wird, daß man in dem Bad eine Auftragwalze für den geschmolzenen Grundstoff kontinuierlich umlaufen läßt, die eine zur Oberfläche des Bades des Grundstoffs im geschmolzenen Zustand parallele Achse hat und deren unterer Teil in den schmelzflüssigen Grundstoff eingetaucht ist und deren oberer Teil mit der erwähnten Seite des Bandmaterials in Kontakt ist, wobei die Oberfläche der Walze Unebenheiten aufweist, die es ermöglichen, die Walze mit dem geschmolzenen Grundstoff zu überziehen und letzteren gleichmäßig auf die Fläche des Bandmaterials aufzutragen,

. daß man den Grundstoff im geschmolzenen Zustand daran hindert, im Kontakt mit dem Bandmaterlal zu erstarren, und

. daß man nach Bildung des Films aus diesem Grundstoff auf dem Bandmaterial die gesteuerte Verfestigung des Grundstoffs auf dem Bandmaterial bewirkt.

2. Verfahren nach Anspruch 1, dadurch gekennzeichnet, daß das Bandmaterial aus der Gruppe ausgewählt wird, die von einem Metall, einer Legierung, einem metallisierten Glasfasermaterial und einem gefüllten oder metallisierten Kunststoff gebildet wird.

3. Verfahren nach Anspruch 2, dadurch gekennzeichnet, daß das Bandmaterial ein Metall ist, das aus Kupfer, Nickel, Eisen und Molybdän ausgewählt wird.

4. Verfahren nach Anspruch 2, dadurch gekennzeichnet, daß das Bandmaterial von Legierungen auf Nickel-, Kupfer- oder Eisenbasis gebildet wird.

5. Verfahren nach Anspruch 4, dadurch gekennzeichnet, daß das Bandmaterial aus Messing, Bronze, Stahl oder einem Monelmetall besteht.

6. Verfahren nach Anspruch 2, dadurch gekennzeichnet, daß das Bandmaterial aus Nickel besteht.

7. Verfahren nach einem der Ansprüche 1 bis 6, dadurch gekennzeichnet, daß der Grundstoff metallisches Lithium ist.

8. Verfahren nach einem der Ansprüche 1 bis 6, dadurch gekennzeichnet, daß der Grundstoff legiertes oder dotiertes Lithium ist.

9. Verfahren nach Anspruch 8, dadurch gekennzeichnet, daß das Lithium mit Antimon, Wismut, Bor, Zinn, Silizium, Magnesium legiert oder dotiert ist.

10. Verfahren nach Anspruch 7, dadurch gekennzeichnet, daß man das Bad auf einer Temperatur hält, die zwischen dem Schmelzpunkt von Lithium und ungefähr 400° variiert.

11. Verfahren nach einem der Ansprüche 1 bis 10, dadurch gekennzeichnet, daß man das Bandmaterial über dem Bad aus dem Grundstoff in geschmolzenem Zustand abwickelt.

12. Verfahren nach einem der Ansprüche 1 bis 11, dadurch gekennzeichnet, daß die auf der Oberfläche der Walze vorhandenen Unebenheiten aus Mustern mit regelmäßiger Geometrie bestehen, die regelmäßig über der Oberfläche der Walze verteilte Hohlräume bilden, wobei die Hohlräume den schmelzflüssigen Grundstoff aufnehmen und ihn auf das metallische Bandmaterial auftragen.

13. Verfahren nach Anspruch 12, dadurch gekennzeichnet, daß die auf der Oberfläche der Walze verteilten Hohlräume in Abhängigkeit von der Dicke des Auftrags des Grundstoffs kalibriert werden.

14. Verfahren nach einem der Ansprüche 1 bis 13, dadurch gekennzeichnet, daß man das Bandmaterial mit einer Geschwindigkeit von 0,5 cm/s bis 100 cm/s abwickelt.

15. Verfahren nach einem der Ansprüche 1 bis 14, dadurch gekennzeichnet, daß man die Walze erhitzt, um zu verhindern, daß der schmelzflüssige Grundstoff erstarrt, bevor er auf die Oberfläche des zu überziehenden Bandmaterials aufgetragen wird.

16. Verfahren nach einem der Ansprüche 1 bis 15, dadurch gekennzeichnet, daß man das Bandmaterial einer thermischen Behandlung unterzieht, bevor und nachdem der Grundstoff in geschmolzenem Zustand auf wenigstens eine seiner Flächen aufgebracht worden ist.

17. Verfahren nach einem der Ansprüche 1 bis 16, dadurch gekennzeichnet, daß man, nachdem das metallische Bandmaterial mit Hilfe des schmelzflüssigen Grundstoffs überzogen worden ist, die überzogene Fläche des Bandmaterials mit einem Schaber behandelt, was es ermöglicht, die Dicke des aufgetragenen Grundstoffs zu reduzieren und erforderlichenfalls die Oberflächenungleichmäßigkeiten, die eventuell von der Walze zurückgelassen worden sind, auszugleichen.

18. Verfahren nach einem der Ansprüche 1 bis 17, dadurch gekennzeichnet, daß man das Bad aus geschmolzenem Grundstoff sowie das Bandmaterial in der Nähe des Bades in einer Inertatmosphäre hält, die weder Sauerstoff noch Wasserdampf enthält.

19. Verfahren nach einem der Ansprüche 1 bis 18, dadurch gekennzeichnet, daß man eine Rakel bereitstellt, die es ermöglicht, jeglichen überschüssigen schmelzflüssigen Grundstoff von der Oberfläche der Walze abzunehmen, bevor letzterer auf die zu überziehende Oberfläche des Bandmaterials aufgebracht wird.

20. Verfahren nach einem der Ansprüche 1 bis 19, dadurch gekennzeichnet, daß das mit der Auftragwalze in Kontakt kommende Bandmaterlal zwischen der Auftragwalze und einer Walze hindurchgeht, die mit Heizeinrichtungen versehen und dafür vorgesehen ist, das Mitnehmen des Bandmaterials zwischen die Walzen durch Reibung zu ermöglichen.

## Claims

1. Process for manufacturing thin electrodes, supported on an electronic conductor strip, made from an element selected from the group comprising lithium, alloyed or doped lithium of which the melting point is not more than 50°C above or below that of lithium, and the said element having a constant thickness, from a coil of the said strip and a source of the said element, characterised in that:
   . a bath of the said element is prepared in the molten state maintained in an inert atmosphere;
   . the said strip is unwound continuously;
   . a constant amount of the element in the molten state is continuously applied to at least one of the two faces of the said strip so as to produce a film on the said strip of which the thickness is constant and is between approximately 0.1 and approximately 40 μm and of which the surface is homogeneous and uniform, the said application process being performed by circulating continuously in the bath a roller for coating with the molten element, which comprises an axis parallel to the surface of the bath of the element in the molten state and of which the base is immersed in the molten element and the top is in contact with the said face of the strip, the surface of the roller comprising rough portions enabling the roller to be coated with the molten element and the latter to be deposited uniformly on the face of the strip;
   . the element in the molten state is prevented from solidifying on contact with the strip; and
   . the controlled solidification of the said element on the strip is brought about when the film of this element has formed on the said strip.

2. Process according to Claim 1, characterised in that the strip is selected from the group comprising a metal, an alloy, a metallised glass fibre and a charged or metallised plastics material.

3. Process according to Claim 2, characterised in that the strip is a metal selected from the group comprising copper, nickel, iron and molybdenum.

4. Process according to Claim 2, characterised in that the strip comprises nickel-, copper- or iron-based alloys.

5. Process according to Claim 4, characterised in that the strip is made of brass, bronze, steel or monel metal.

6. Process according to Claim 2, characterised in that the strip is made of nickel.

7. Process according to any one of Claims 1 to 6, characterised in that the element is metallic lithium.

8. Process according to any one of Claims 1 to 6, characterised in that the element is alloyed or doped lithium.

9. Process according to Claim 8, characterised in that lithium is alloyed or doped with antimony, bismuth, boron, tin, silicon or magnesium.

10. Process according to Claim 7, characterised in that the bath is maintained at a temperature varying between the melting point of lithium and approximately 400°C.

11. Process according to any one of Claims 1 to 10, characterised in that the strip is unwound above the bath of the element in the molten state.

12. Process according to any one of Claims 1 to 11, characterised in that the rough portions on the surface of the roller comprise designs of regular geometry forming cavities regularly distributed over the surface of the roller, the said cavities receiving the molten element and depositing it on the metal strip.

13. Process according to Claim 12, characterised in that the cavities distributed over the surface of the roller are calibrated as a function of the thickness of the element deposited.

14. Process according to any one of Claims 1 to 13, characterised in that the strip is unwound at a velocity between 0.5 cm/s and 100 cm/s.

15. Process according to any one of Claims 1 to 14, characterised in that the roller is heated in order to prevent the molten element solidifying before it is deposited on the face of the strip to be coated.

16. Process according to any one of Claims 1 to 15, characterised in that the strip is subjected to a heat treatment before and after the element in the molten state has been applied to at least one of its faces.

17. Process according to any one of Claims 1 to 16, characterised in that, after coating the metal strip with the molten element, the coated face of the strip is subjected to the action of a scraper enabling the thickness of the element applied to be reduced and, if necessary, to render uniform any of the surface imperfections which may have been left by the roller.

18. Process according to any one of Claims 1 to 17, characterised in that the molten element bath and the strip in the vicinity of the said bath are maintained in an inert atmosphere which contains neither oxygen nor water vapour.

19. Process according to any one of Claims 1 to 18, characterised in that a scraper blade enabling all excess molten element to be removed from the surface of the roller before the latter is applied against the face of the strip to be coated is provided.

20. Process according to any one of Claims 1 to 19, characterised in that the strip coming into contact with the coating roller passes between the said coating roller and a roller provided with heating means and arranged so as to enable the said strip to be driven by friction between the said rollers.

EP 0 285 476 B1

FIG. 2

FIG. 7

FIG. 3

FIG. 4

FIG. 5